# EUROPÄISCHE PATENTSCHRIFT

(11) **EP 3 813 238 B1**
(45) Veröffentlichungstag und Bekanntmachung des Hinweises auf die Patenterteilung: **01.12.2021**
(21) Anmeldenummer: 19205443.5
(22) Anmeldetag: 25.10.2019
(51) Int. Cl.: H02K 3/04, H02K 21/24, H02K 9/19, H02K 16/00, H02K 3/47

(54) **SPULENMODUL FÜR EINE ELEKTRISCHE MASCHINE**
COIL MODULE FOR AN ELECTRIC MACHINE
MODULE DE BOBINE POUR UNE MACHINE ÉLECTRIQUE

(43) Veröffentlichungstag der Anmeldung: 28.04.2021
(73) Patentinhaber: Vaionic Technologies GmbH, 12489 Berlin (DE)
(72) Erfinder: DOMINIK, Yannick, 12489 Berlin (DE); BERTHELMANN, Jörg, 12489 Berlin (DE); FRANZ, Georg, 12489 Berlin (DE)
(74) Vertreter: Vossius & Partner Patentanwälte Rechtsanwälte mbB

(56) Entgegenhaltungen:
- EP-A1- 3 460 957
- WO-A1-2012/128646
- US-A- 6 040 650
- US-B1- 7 795 773

## Beschreibung

Die vorliegende Erfindung betrifft ein Spulenmodul für eine elektrische Maschine.

Elektrische Maschinen unterschiedlichster Bauarten sind aus dem Stand der Technik bekannt. In der Druckschrift DE 10 2017 204 072 A1 wird eine Wicklungsart in Mäanderform für einen Elektromotor beschrieben, bei der eine hohe Dichte an elektrisch leitfähigem Material im Bereich eines von Permanentmagneten generierten Magnetfelds gewährleistet wird. Nachteilig an derartigen Aufbauten ist jedoch der verwendete Flachdraht durch seine zur Ineffizienz führenden elektromagnetischen Besonderheiten. Zudem gestaltet sich ein mehrphasiger Aufbau schwierig. WO2012128646 und US7795773 beschreiben axialen Elektromotoren mit aktiven Bereichen, die dicker als die passiven Bereichen sind.

Der vorliegenden Erfindung liegt daher die Aufgabe zugrunde, ein Spulenmodul für eine elektrische Maschine vorzuschlagen, mit dem diese Nachteile überwunden werden und ein kompakter Aufbau mit reduziertem Platzbedarf realisierbar ist.

Diese Aufgabe wird erfindungsgemäß gelöst von einem Spulenmodul nach Anspruch 1. Vorteilhafte Ausgestaltungen und Weiterbildungen sind in den abhängigen Ansprüchen beschrieben.

Ein Spulenmodul für eine elektrische Maschine weist mindestens eine Spulenscheibe auf. Die Spulenscheibe wiederum weist einen Spulenträger aus einem elektrisch isolierenden Werkstoff und eine Vielzahl von einzelnen Wicklungen aus einem elektrisch leitfähigen Werkstoff, typischerweise in Drahtform, auf. Die Wicklungen sind um einen Mittelpunkt der mindestens einen Spulenscheibe umlaufend auf der mindestens einen Spulenscheibe angeordnet. Jede der Wicklungen weist zwei von dem Mittelpunkt ausgehend radial verlaufende aktive Bereiche und zwei tangential an ihrem radial äußeren und inneren Rand verlaufende passive Bereiche auf. In Draufsicht auf die mindestens eine Spulenscheibe überdecken die aktiven Bereiche unterschiedlicher Wicklungen einander nicht, aber jeder passive Bereich einer der Wicklungen überdeckt jeweils die entsprechenden passiven Bereiche der beiden unmittelbar benachbarten Wicklungen teilweise. In den aktiven Bereichen ist im Querschnitt eine Dicke der jeweiligen Wicklung in axialer Richtung größer bei gleicher Querschnittsfläche als in den passiven Bereichen der jeweiligen Wicklung.

Durch die teilweise Überlappung in den passiven Bereichen ist eine Menge an elektrisch leitfähigem Werkstoff, vorzugsweise Kupfer, in den passiven Bereichen typischerweise doppelt so hoch wie in den aktiven Bereichen. Um eine Aufdickung der Spulenscheibe und eines aus mindestens einer Spulenscheibe gebildeten Spulenmoduls in axialer Richtung zu verhindern, ist die Dicke im Querschnitt in den aktiven Bereichen größer als in den passiven Bereichen, so dass ein kompakter Aufbau gewährleistet wird. Unter einem elektrisch isolierenden Werkstoff soll dabei ein Werkstoff mit einer elektrischen Leitfähigkeit von weniger als 10⁻⁸ S/m bei einer Temperatur von 25 °C verstanden werden. Als elektrisch leitfähiger Werkstoff soll hierbei jeder Werkstoff verstanden werden, dessen elektrische Leitfähigkeit größer ist als 10⁶ S/m bei einer Temperatur von 25 °C. Als radiale Richtung soll im Rahmen dieser Schrift in Übereinstimmung mit gängigen Konventionen die ausgehend von dem Mittelpunkt in gerader Linie zum Rand verlaufende Richtung verstanden werden, als tangentiale Richtung dementsprechend eine rechtwinklig auf der radialen Richtung verlaufende Richtung. Dadurch, dass sich der Querschnitt der umlaufend angeordneten Wicklungen zwischen aktiven Bereichen und passiven Bereichen ändert, kann ein axialer Abstand des Luftspalts zwischen Magnetscheiben variiert und so ein relativer Kupferfüllgrad erhöht werden. Zudem kann durch die reduzierte Dicke in den passiven Bereichen eine dreiphasige Anordnung der Wicklungen leichter untergebracht werden. Als Draufsicht soll im Rahmen dieser Schrift eine Sicht entlang eines Normalenvektors der mindestens einen Spulenscheibe verstanden werden, als Seitenansicht entsprechend eine um 90° gegenüber der Draufsicht abgewinkelt Position. Der Normalenvektor soll hierbei von der Fläche ausgehend, in denen Länge und Breite der mindestens einen Spulenscheibe größer sind als eine Dicke der mindestens einen Spulenscheibe. In der elektrischen Maschine ist der Normalenvektor somit parallel zur Rotationsachse. Die auch als Spulen bezeichneten Wicklungen liegen vorzugsweisen als kernlose bzw. eisenkernlose Wicklungen vor. Unter dem Begriff "Spulenträger" soll im Rahmen dieser Schrift insbesondere ein Träger für Wicklungen bzw. Spulen verstanden werden, der typischerweise die Wicklungen mechanisch verbindet und vorzugsweise aus einem Epoxy-Harz oder anderem temperaturfestem Kunststoff besteht. Unter dem Begriff "Spulenscheibe" ist im Rahmen dieser Schrift ein entsprechender durch den Spulenträger fixierter Ring mit den Spulen bzw. Wicklungen zu verstehen, während der Begriff "Spulenmodul" ein komplettes Einbauteil mit mindestens einer Spulenscheibe, typischerweise aber zwei oder mehr Spulenscheiben bezeichnen soll.

Ein Verhältnis der Dicke der jeweiligen Wicklung in den passiven Bereichen zu der Dicke in den aktiven Bereichen kann kleiner als 1 sein. Vorzugsweise ist das Verhältnis größer oder gleich 0,3 und kleiner 1, bei äußeren passiven Bereichen besonders vorzugsweise genau 0,5, um den größeren Bauraum auszunutzen und bei der Betrachtung der Spulenscheibe eine einheitliche relative Dicke mit dem aktiven Bereich von gleich 1 zu erzeugen.

Typischerweise ändert sich bei einem Übergang von einem aktiven Bereich zu einem passiven Bereich die Form der Querschnittsfläche der jeweiligen Wicklung. Erfindungsgemäß bleibt ein Flächeninhalt der Querschnittsfläche gleich und ein Füllfaktor wird maximal, was beispielsweise bei einem Verpressen erfolgen kann, aber durch die geänderte Form kann mehr Material von den Magnetfeldlinien durchflossen werden und somit der Antrieb effizienter gestaltet werden. Durch die geänderte Form kann der für den elektrisch leitfähigen Werkstoff verfügbare Bauraum bei gleichbleibendem Magnetabstand in der elektrischen Maschine verwendet werden und somit Leistung und Effizienz entsprechend gesteigert werden.

Es kann vorgesehen sein, dass alle aktiven Bereiche verschiedener Wicklungen, typischerweise aller Wicklungen, in Seitenansicht in einer einzelnen Ebene angeordnet sind. Durch die Anordnung in einer einzigen Ebene wird erreicht, dass alle aktiven Bereiche gleichermaßen im Magnetfeld eines Magnetmoduls liegen.

Typischerweise sind die Wicklungen aus einer feinen Litze aus mehreren gegeneinander elektrisch isolierten Drähten gebildet, wobei die elektrisch zueinander isolierten Drähte einen Drahtdurchmesser kleiner gleich 0,1 mm aufweisen. Durch mehrere mit einer elektrisch isolierenden Beschichtung versehene Litzen kann sowohl eine ausreichende Flexibilität der aus dem Draht gebildeten Wicklung bei der Fertigung gewährleistet als auch eine ausreichend hohe elektrische Leitfähigkeit erreicht werden.

Eine Anzahl der Wicklungen entspricht vorzugsweise einem ganzzahligen Vielfachen von 3, so dass die Wicklungen einen Drei-Phasen-Betrieb ermöglichen. Es werden somit also insgesamt drei Stränge unterschiedlicher Phasen aus den Wicklungen gebildet. In besonders bevorzugter Weise liegen hierbei alle aktiven Bereiche der Wicklungen in Seitenansicht in einer einzigen Ebene, während die passiven Bereiche auf zwei Ebenen verteilt sind. Typischerweise sind zwei Phasen jeweils in einer Ebene und eine dritte Phase vollzieht einen zusätzlichen Ebenenwechsel. Die beiden Ebenen sind typischerweise voneinander verschieden, aber parallel zueinander.

Es kann vorgesehen sein, dass alle Wicklungen identisch aufgebaut sind, also insbesondere identische Abmessungen und Formen aufweisen. Es kann alternativ aber auch vorgesehen sein, zumindest eine in ihrer Form oder Dicke sich von den restlichen Wicklungen unterscheidende Wicklung zu verwenden.

Die Spulenscheibe kann derart ausgebildet sein, dass sich ein innerer passiver Bereich und ein äußerer passiver Bereich einer der Wicklungen in ihrer Dicke in axialer Richtung unterscheiden. Der innere passive Bereich ist hierbei zu dem Mittelpunkt der Spulenscheibe und des Spulenmoduls in geringerem Abstand angeordnet als der äußere passive Bereich. Typischerweise ist hierbei die Dicke des äußeren passiven Bereichs einer der Wicklungen so gewählt, dass ein Verhältnis der Dicke dieses Bereichs zu der Dicke der aktiven Bereiche kleiner gleich 0,5 ist. Für den inneren passiven Bereich kann vorgesehen sein, dass das Verhältnis der Dicke dieses inneren passiven Bereichs zu der Dicke der aktiven Bereiche kleiner 1 ist. Hierdurch kann die Kühloberfläche von den aktiven Bereichen noch auf die äußeren passiven Bereiche erweitert werden.

Eine elektrische Maschine wie ein Elektromotor bzw. elektrischer Motor oder ein Elektrogenerator bzw. elektrischer Generator weist eine Lagerung und eine in der Lagerung geführte Welle auf. Entlang der Welle sind mindestens ein Magnetmodul mit mehreren Permanentmagneten und mindestens ein Spulenmodul mit den zuvor beschriebenen Eigenschaften konzentrisch angeordnet, wobei das Magnetmodul an der Welle angebracht ist und das Spulenmodul mit einem Gehäuse verbunden ist. Durch die hohe Packungsdichte der Wicklungen wird eine besonders vorteilhafte Effizienz und Leistungsdichte beim Betrieb der elektrischen Maschine erreicht.

Das mindestens eine Spulenmodul kann zumindest an seiner dem Magnetmodul zugewandten Seite mit einer Folie aus einem elektrisch isolierenden Werkstoff beklebt sein, um einen Flüssigkeitsdurchtritt zu verhindern und ein Ausbilden von Kühlkanälen zu ermöglichen. Statt einer Klebeverbindung kann die Folie auch durch eine andere Verbindung wie eine Schweißverbindung als stoffschlüssige Verbindung oder eine kraftschlüssige Verbindung, beispielsweise durch einen aufgeschraubten Ring, aufgebracht sein.

Um die elektrische Maschine und insbesondere die aktiven Bereiche effizient zu kühlen, kann das mindestens eine Spulenmodul mindestens zwei miteinander verbundene Spulenscheiben und einen durch einen Hohlraum zwischen den beiden Spulenscheiben gebildeten Kühlkanal aufweisen. Alternativ oder zusätzlich kann der Kühlkanal auch durch die Spulenscheibe oder das Spulenmodul und die Folie gebildet und begrenzt werden.

Ausführungsbeispiele der Erfindung sind in den Zeichnungen dargestellt und werden nachfolgend anhand der Figuren 1 bis 6 erläutert.

Es zeigen:
- Fig. 1: eine Explosionsansicht eines Elektromotors;
- Fig. 2: eine Draufsicht auf eine Spulenscheibe;
- Fig. 3: eine Seitenansicht eines Spulenmoduls;
- Fig. 4: eine Draufsicht und Schnittansicht einer Wicklung;
- Fig. 5: eine Draufsicht auf das Spulenmodul und
- Fig. 6: eine Schnittansicht des Spulenmoduls.

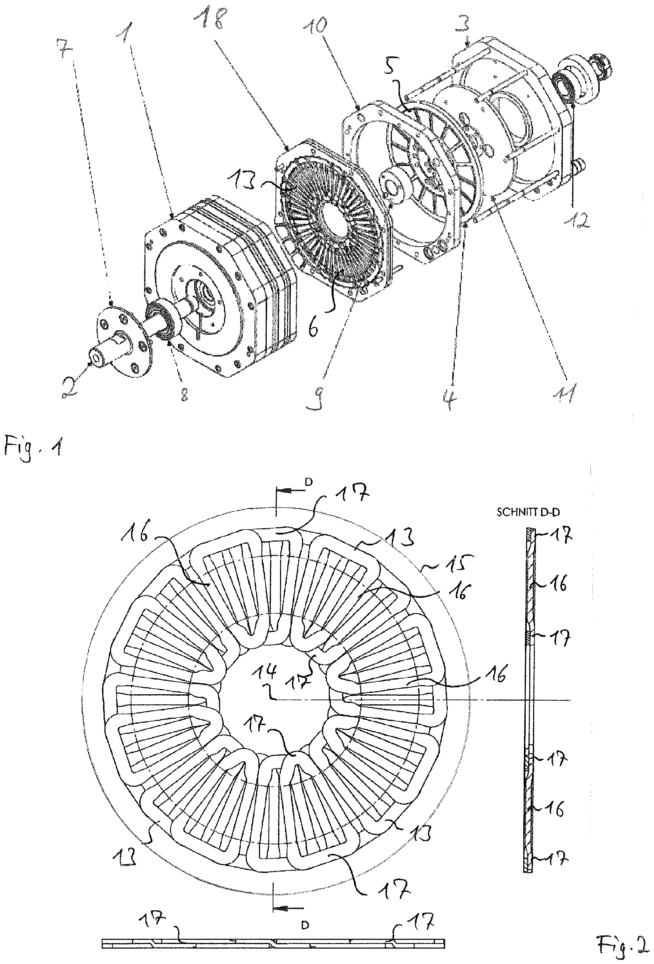

In Figur 1 ist in einer Explosionsansicht ein Elektromotor dargestellt. Ein erster Lagerschild 1 bildet zusammen mit einem zweiten Lagerschild 3 eine Lagerung. Mittig in den Lagerschilden 1 und 3 wird eine Motorwelle 2 geführt, die mit einem Lagerdeckel 7 und einem Festlager 8 im Bereich des ersten Lagerschilds 1 und mit einem Loslager 12 im Bereich des zweiten Lagerschild 3 versehen ist. Die Lagerschilde 1 und 3, der Lagerdeckel 7 und ein Spulenabstandshalter 10 und ein Magnetabstandshalter 9 sind in dem dargestellten Ausführungsbeispiel aus Polyamid ausgebildet, die Motorwelle 2 aus Edelstahl und das Festlager 8 sowie das Loslager 12 als Rillenkugellager aus Stahl.

Zwischen dem ersten Lagerschild 1 und dem zweiten Lagerschild 3 sind ein Spulenmodul 18 aus zwei axial hintereinander angeordneten Spulenscheiben 6 und eine Magnetscheibe 4 bzw. Magnetmodul sichtbar angeordnet, die durch den Spulenabstandshalter 10 und den Magnetabstandshalter 9 auf einer vorherbestimmten räumlichen Distanz voneinander gehalten werden. Das Spulenmodul 18 ist scheibenförmig, d. h. seine Länge und Breite sind deutlich größer als seine Dicke (die in Figur 1 in axialer Richtung gemessen wird). Unter dem Begriff "deutlich größer" soll hierbei verstanden werden, dass seine Dicke maximal 10 Prozent ihrer Länge bzw. ihrer Breite beträgt. Die Länge und die Breite sind typischerweise gleich groß. Das Spulenmodul 18 dient im dargestellten Ausführungsbeispiel als Stator, der gestapelt auf der Motorwelle 2 zwei als Rotoren dienenden Magnetscheiben 4 bzw. Magnetmodulen benachbart ist. Der Stator ist dabei mittig zwischen den beiden Magnetscheiben 4 angeordnet. Zusätzlich ist bei dem in Figur 1 dargestellten Ausführungsbeispiel ein Eisenrückschluss 11 zwischen der Magnetscheibe 4 und dem zweiten Lagerschild 3 vorgesehen, dieser Eisenrückschluss 11 kann aber in weiteren Ausführungsbeispielen auch entfallen oder alternativ ausgeführt sein.

Die Magnetscheiben 4 bestehen aus einem nicht magnetisierbaren, vorzugsweise elektrisch nichtleitenden Werkstoff wie Aluminium und sind auf der Motorwelle 2 befestigt, die in den Lagern der Lagerschilde 1 und 3 montiert ist. Ebenfalls auf der Motorwelle 2 montiert ist der Magnetabstandshalter 9, der einen Luftspalt zwischen den Magnetscheiben 4 herstellt. Auf der Magnetscheibe 4 sind Permanentmagnete 5 radial umlaufend in alternierender Ausrichtung, also immer abwechselnd mit Nordpol und Südpol in Richtung des Stators weisend, angeordnet. Eine Anzahl der Permanentmagnete 5 ist hierbei stets geradzahlig. In dem dargestellten Ausführungsbeispiel entspricht die Anzahl der Permanentmagnete 5 gerade dem Doppelten einer Anzahl an Wicklungen pro Phase.

In dem in Figur 1 gezeigten Ausführungsbeispiel kann ein einzelnes Spulenmodul 18 aus zwei Spulenscheiben 6 gefertigt sein, es kann aber auch vorgesehen sein, drei oder mehr dieser Spulenscheiben 6 miteinander zu verbinden und somit das Spulenmodul 18 zu erhalten. In einem sich dabei ausbildenden Hohlraum zwischen den einzelnen Spulenscheiben 6 kann während des Betriebs ein Kühlmedium geleitet werden. Den einfachsten aber dabei gleichzeitig effizient betreibbaren Aufbau des Motors bilden ein einzelnes Spulenmodul 18 mit einer einzigen Spulenscheibe 6 und zwei Magnetscheiben 4, es kann aber auch vorgesehen sein, entsprechend mehr Spulenmodule 18 und Magnetscheiben 4 vorzusehen, wobei eine Anzahl der Magnetscheiben 4 typischerweise um eins größer ist als eine Anzahl der Spulenmodule 18. Vorzüge einer entsprechenden modularen Bauweise ergeben sich gerade bei entsprechender Wellen- und Lagerauslegung durch die variable Anzahl an verbauten Spulenmodulen 18 und Magnetscheiben 4. Neben einer Kombination der beiden Module Spulenmodul 18 und Magnetscheibe 4 führt die Variation der einzelnen Module zu weiterer Flexibilität in der Motorauslegung. Das Spulenmodul 18 und die Magnetscheibe 4 lassen sich unabhängig voneinander anpassen, z. B. kann ausschließlich eine Anpassung der Permanentmagnete 5 nötig sein, während der restliche Aufbau unverändert bleibt.

In Figur 2 ist in einer Draufsicht, also entlang einer Normalenrichtung, die sowohl senkrecht auf der Länge als auch senkrecht auf der Breite des Spulenmoduls 18 steht, ein die Spulenscheibe 6 bildender Spulenträger 15 mit darauf angeordneten Wicklungen 13 gezeigt. Wiederkehrende Merkmale sind in dieser Figur wie auch in den folgenden Figuren mit identischen Bezugszeichen versehen. Der Spulenträger 15 ist in Draufsicht rund, d. h. die Länge entspricht gerade größenmäßig der Breite, und aus einem elektrisch isolierenden Werkstoff gefertigt. Auf dem Spulenträger 15 sind radial umlaufend um einen Mittelpunkt 14 des Spulenträgers 15 mehrere einzelne Wicklungen 13 angeordnet, wobei jede der Wicklungen 13 von unmittelbar benachbarten Wicklungen 13 elektrisch isoliert ist. Im Mittelpunkt 14 schneidet die Rotationsachse der elektrischen Maschine den Spulenträger 15. In dem in Figur 2 wiedergegebenen Ausführungsbeispiel sind diese Wicklungen 13 dreiphasig gewickelt. Jede Wicklung besteht aus mehreren Windungen Litze. Dies führt dazu, dass jeweils jede dritte Wicklung 13 in ihrer Anordnung im Verbund gleich ausgestaltet ist. Diese Wicklungen 13 sind auch hinsichtlich ihrer Tiefenausrichtung und -anordnung gleich positioniert: eine erste Phase wird also durch die in Figur 1 als oberste Lage sichtbaren Wicklungen 13 gebildet.

Jede der Wicklungen 13 weist zwei von dem Mittelpunkt 14 der Spulenscheibe 6 ausgehende radial verlaufende aktive Bereiche 16, die zum Drehmoment des Motors beitragen, und zwei tangential an ihrem radial äußeren Rand und inneren Rand verlaufende passive Bereiche 17 auf. Die inneren passiven Bereiche 17, die also näher an dem Mittelpunkt 14 als die äußeren passiven Bereiche 17 angeordnet sind, sind hierbei in ihrer Länge kürzer als die äußeren passiven Bereiche 17. Die aktiven Bereiche 16 unterschiedlicher Wicklungen 13 überlappen einander in Draufsicht, d. h. in einer Sicht entlang der Motorwelle 2 nicht, jeder der passiven Bereiche 17 einer der Wicklungen 13 überdeckt jeweils die entsprechenden passiven Bereiche 17 der beiden unmittelbar benachbarten Wicklungen 13 teilweise.

Bei dem in Figur 2 gezeigten Ausführungsbeispiel ist jede der drei Phasen aus einzelnen Zähnen, d. h. einzelnen Wicklungen 13 aufgebaut, die einzelnen Wicklungen 13 sind hierbei mehrfach umlaufend gewickelt, es kann aber auch nur ein einzelner Umlauf vorgesehen sein. Eine Besonderheit liegt darin, dass die unterschiedlichen Phasen in den speichenartig aufgebauten aktiven Bereichen 16 in einer einzigen Ebene nebeneinanderliegen. In Figur 2 sind diese aktiven Bereiche 16 durch die beiden Kreislinien über den Wicklungen 13 kenntlich gemacht. Die aktiven Bereiche 16 sind daher auch in ihrer Form und ihren Abmessungen jeweils identisch, während die passiven Bereiche 17 sowohl hinsichtlich Form, als auch hinsichtlich Abmessungen unterschiedlich aufgebaut sind.

Die passiven Bereiche 17 weisen Überlappungen von immer zwei benachbarten Zähnen auf, wodurch die einzelnen Phasen einen Ebenenwechsel vollziehen müssen. Ohne Querschnittswechsel verdoppelt sich bei direkter Überlappung die Dicke der Spulenscheibe 6 im Bereich der passiven Bereiche 17 in axialer Richtung. Eine daraus resultierende Erhöhung eines axialen Abstands der Permanentmagnete 5 kann durch einen Querschnittswechsel, also einen Wechsel im Dicken-zu-Breiten-Verhältnis bzw. Höhen-zu-Breiten-Verhältnis, der Wicklungen 13 beeinflusst werden. Ein Verhältnis der Dicke der jeweiligen Wicklung 13 in den aktiven Bereichen 16 zu der Dicke in den passiven Bereichen 17 beträgt in dem dargestellten Ausführungsbeispiel gerade 2. Hierbei kann vereinfacht von einer auf 1 normierten Dicke bzw. Höhe der aktiven Bereiche 16 in axialer Richtung ausgegangen werden (die in dem dargestellten Ausführungsbeispiel alle hinsichtlich ihrer Dicke identisch ausgestaltet sind), wohingegen die passiven Bereiche 17 (die in dem dargestellten Ausführungsbeispiel ebenfalls alle hinsichtlich ihrer Dicke identisch ausgestaltet sind) eine bezogen auf diese normierte Dicke geringere Dicke von 0,75 aufweisen, aber in seitlicher Ansicht diese Dicken der passiven Bereiche 17 aufgrund ihrer fluchtend hintereinander befindlichen Anordnung sich auf lediglich 1,5 summieren. Eine derartige Anordnung ist beispielsweise in der Schnittansicht in Figur 2 auf der rechten Seite dargestellt. Während die passiven Bereiche 17 für sich betrachtet jeweils eine geringere Dicke bzw. Höhe als die aktiven Bereiche 16 aufweisen, sind in der übereinanderliegenden Anordnung der Wicklungen 13 durch die Überlappungen die passiven Bereiche 17 dicker erscheinen und sich im Mittelteil zusätzlicher Bauraum ergibt, in dem die Permanentmagnete 5 näher an die aktiven Bereiche 16 geführt werden können. Im unteren Teil von Figur 2 wird schematisch ein Verlauf der Außenseite der passiven Bereiche 17 wiedergegeben. Hierbei wird deutlich, dass jede dritte Wicklung 13 in ihrem passiven Bereich 17 einen Ebenenwechsel vollzieht. Eine Anzahl der Wicklungen 13 entspricht in dem dargestellten Ausführungsbeispiel einem ganzzahligen Vielfachen von drei, so dass die Wicklungen 13 einen Drei-Phasen-Betrieb ermöglichen. Es werden somit also insgesamt drei Stränge unterschiedlicher Phasen aus den Wicklungen 13 gebildet, wobei alle aktiven Bereiche 16 der Wicklungen 13 in Seitenansicht in einer einzigen Ebene liegen, während die passiven Bereiche 17 auf zwei Ebenen verteilt sind. Zwei Phasen sind jeweils in einer Ebene und eine dritte Phase vollzieht einen zusätzlichen Ebenenwechsel.

Zwei Phasen können beispielsweise statt in axialer Richtung in radialer Richtung durch einen entsprechenden Querschnittswechsel gestapelt bzw. nebeneinander gelegt werden, was zu einer Vergrößerung der Spulenscheibe 6 in radialer Richtung führt. Bei einer Verdopplung der Höhe bzw. Dicke der passiven Bereiche 17 in radialer Richtung wird eine Dopplung der beiden Phasen in axialer Richtung kompensiert und es ergibt sich eine Ebene für die gesamte Spulenscheibe 6. Es ergibt sich somit ein dreiphasig gewickeltes eisenloses Spulenmodul 18 mit anpassbarem Querschnittswechsel der Wicklungen 13 und somit anpassbarer axialer Höhe des Spulenmoduls 18 für die Verwendung in eisenlosen Axialflusselektromotoren.

Bei dem in Figur 2 gezeigten Ausführungsbeispiel bilden somit jeweils acht kreisförmig angeordnete und elektrisch seriell verschaltete Wicklungen 13 eine Spule. Drei dieser Spulen werden entsprechend der drei Phasen des elektrischen Stroms, mit dem Spulenträger 15 in der Spulenscheibe 6 und dem Spulenmodul 18 zusammengefasst.

In weiteren Ausführungsbeispielen ist es auch möglich, zwei oder mehr Spulenscheiben 6 miteinander zu verkleben oder anderweitig miteinander stoffschlüssig oder kraftschlüssig zu verbinden, um so das Spulenmodul 18 zu erhalten. Eine Größe des Hohlraums zwischen den aktiven Bereichen 16 kann durch eine Querschnittsänderung der durch die Wicklungen 13 gebildeten Spulenstruktur angepasst werden.

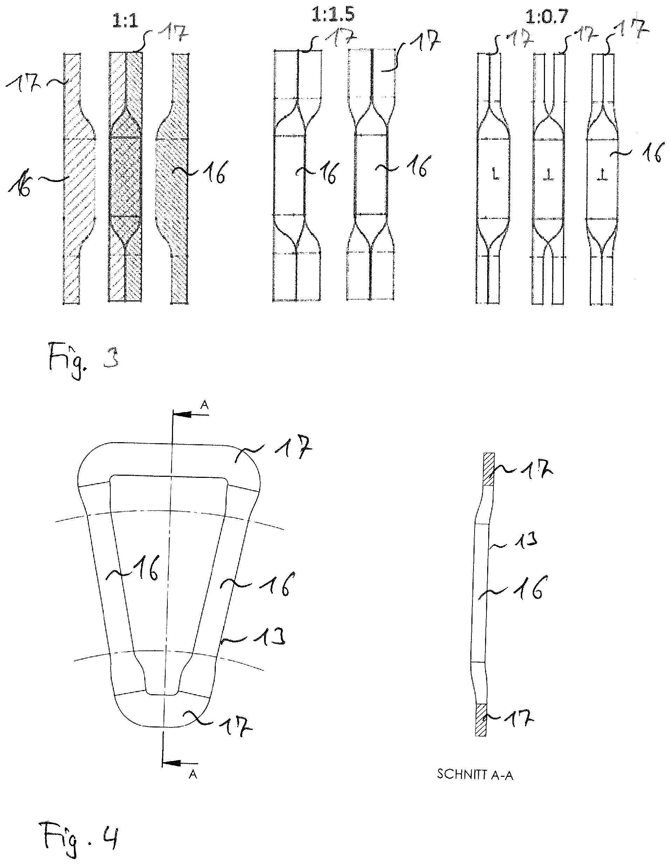

Figur 3 zeigt in einer schematischen Seitenansicht entsprechende Querschnittswechsel auf der Spulenscheibe 6. In Figur 3 ist links unter dem Verhältnis 1:1 eine Wicklung 13 schematisch dargestellt, bei der die passiven Bereiche 17 nur halb so dick sind wie die aktiven Bereiche 16. In einer einzigen Spulenscheibe 6 überlappen sich stets nur die passiven Bereiche 17 teilweise (und auch nie vollständig), nie aber die aktiven Bereiche 16. Die dickeren aktiven Bereiche 16 sind in derselben Ebene in der linken Ansicht von Figur 3 hintereinander angeordnet, während die passiven Bereiche 17 durch den Querschnittswechsel nur halb so dick sind und durch die unterschiedlichen Ebenen ein Gesamtverhältnis zwischen aktiven Bereichen 16 und passiven Bereichen 17 von 1:1 ergeben, d.h. dass die Summe der Dicken der passiven Bereiche 17 gerade der Dicke der aktiven Bereiche 16 im Querschnitt entspricht.

Bei der mittleren Zeichnung in Figur 3 mit dem Verhältnis 1:1,5 ist die Spulenscheibe 6 wiederum im Querschnitt dargestellt. Die passiven Bereiche 17 sind in Summe in der gezeigten Querschnittsansicht nun infolge der Überlappung gerade 1,5-mal dicker als die aktiven Bereiche 16, die wegen ihrer Anordnung hintereinander in seitlicher Ansicht weniger Bauraum benötigen. Die beiden unter 1:1,5 gezeigten Ausführungsbeispiele zeigen unterschiedliche Ebenenwechsel, wodurch im ersten Ausführungsbeispiel (links) ein Hohlraum rechts des aktiven Bereichs 16 und im zweiten Ausführungsbeispiel (rechts) zwei Hohlräume beidseitig des aktiven Bereichs 16 entstehen. In derartig ausgebildete Hohlräume können die Magnete der Magnetanordnung eingeführt werden und somit der axiale Abstand bzw. Spalt zwischen den aktiven Bereichen 16 und den Permanentmagneten 5 verkleinert werden (auch wenn dieser nicht vollständig verschwinden kann). Der zur Verfügung stehende Bauraum wird also effizienter ausgenutzt. Alternativ können die sich ausbildenden Hohlräume auch für die Kühlung verwendet werden.

Auf der rechten Seite von Figur 3 ist schließlich noch ein Verhältnis von 1:0,7 dargestellt. Die drei gezeigten Ausführungsbeispiele zeigen eine Ausbildung von Hohlräumen durch entsprechende Querschnitts- und Ebenenwechsel in den passiven Bereichen 17. Auch diese Hohlräume können für die Kühlung verwendet werden. Bei den beschriebenen Ausführungsbeispielen werden vorzugsweise für die Wicklungen 13 flexible Litzen aus Kupfer oder Aluminium mit einem Durchmesser von kleiner 2 mm, nämlich 1,2 mm im dargestellten Ausführungsbeispiel, verwendet, die aus mehreren zueinander elektrisch isolierten Einzeldrähten mit einem Durchmesser von kleiner 0,2 mm, typischerweise aber 0,05 mm im dargestellten Ausführungsbeispiel bestehen.

Ein zwischen den als Stegen ausgebildeten aktiven Bereichen 16 der das Spulenmodul 18 bildenden Spulenscheiben 6 gebildeter Hohlraum kann für die Durchströmung mit einem Kühlmedium genutzt werden. Zur hydraulischen Abdichtung werden in diesem Fall die Spulenscheiben 6 an einer der Magnetscheibe 4 zugewandten Seite mit einer fluiddichten Folie aus einem elektrisch nicht leitfähigen Werkstoff beklebt, so dass das aus mehreren Spulenscheiben 6 gebildete Spulenmodul 18 nach außen hin abgedichtet ist. Die Hohlräume können hierbei rechteckig, dreieckig oder trapezförmig bzw. in komplexen Formen ausgestaltet sein.

In Figur 4 ist in der linken Abbildung in einer Draufsicht eine der Wicklungen 13 entsprechend der Darstellung in Figur 2 wiedergegeben. Aus der auf der rechten Seite von Figur 4 gezeigten Schnittansicht durch die Wicklung 13 ist ersichtlich, dass in den aktiven Bereichen 16 die Dicke größer ist als in den passiven Bereichen 17.

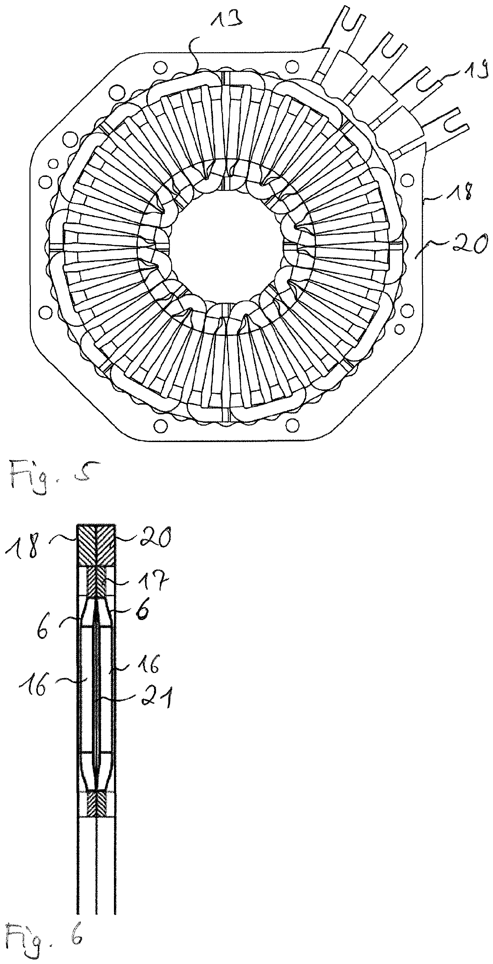

Figur 5 zeigt in einer Figur 2 entsprechenden Draufsicht ein Spulenmodul 18, bei dem zwei Spulenscheiben 6 in axialer Richtung hintereinander angeordnet und jeweils in einem den Spulenträger 15 ergänzenden Spulenträgerring 20 eingebettet sind, wobei von den Wicklungen 13 elektrische Kontakte 19 aus dem Spulenträgerring 20 herausgeführt sind. Der Spulenträgerring 20 ist in diesem Ausführungsbeispiel aus einem Glasfaser-Epoxid-Harz-Gewebe gefertigt.

In Figur 6 ist in einer Schnittansicht da Spulenmodul 18 gezeigt, wobei die beiden miteinander kombinierten Spulenscheiben 6 derart angeordnet sind, dass zwischen den aktiven Bereichen 16 beider Spulenscheiben 6 ein Hohlraum 21 ausgebildet ist. Da die Spulenscheiben fluiddicht mittels einer Folie abgedichtet sind, kann in diesen Hohlraum 21 ein Kühlmedium eingebracht werden. Lediglich in den Ausführungsbeispielen offenbarte Merkmale der verschiedenen Ausführungsformen können miteinander kombiniert und einzeln beansprucht werden.

## Patentansprüche

1. Spulenmodul (18) für eine elektrische Maschine mit
mindestens einer Spulenscheibe (6) mit
mindestens einem Spulenträger (15) aus einem elektrisch isolierenden Werkstoff und
einer Vielzahl von einzelnen Wicklungen (13) aus einem elektrisch leitfähigen Werkstoff, die um einen Mittelpunkt (14) der mindestens einen Spulenscheibe (6) umlaufend auf der mindestens einen Spulenscheibe (6) angeordnet sind, wobei
jede der Wicklungen (13) zwei von dem Mittelpunkt (14) ausgehend radial verlaufende aktive Bereiche (16) und zwei tangential an ihrem radial äußeren und inneren Rand verlaufende passive Bereiche (17) aufweist und
in Draufsicht auf die Spulenscheibe (6) die aktiven Bereiche (16) unterschiedlicher Wicklungen (13) einander nicht überdecken, aber jeder passive Bereich (17) einer der Wicklungen (13) jeweils die entsprechenden passiven Bereiche (17) der beiden unmittelbar benachbarten Wicklungen (13) teilweise überdeckt, **dadurch gekennzeichnet, dass**
in den aktiven Bereichen (16) die jeweilige Wicklung (13) im Querschnitt bei gleicher Querschnittsfläche eine größere Dicke in axialer Richtung aufweist als in den passiven Bereichen (17).

2. Spulenmodul (18) nach Anspruch 1, **dadurch gekennzeichnet, dass** das Verhältnis der Dicke der jeweiligen Wicklung (13) in den passiven Bereichen (17) zu der Dicke in den aktiven Bereichen (16) größer oder gleich als 0,3 und kleiner als 1 ist.

3. Spulenmodul (18) nach einem der vorhergehenden Ansprüche,
**dadurch gekennzeichnet, dass** sich bei einem Übergang von einem aktiven Bereich (16) zu einem passiven Bereich (17) die Form der Querschnittsfläche der jeweiligen Wicklung (13) ändert.

4. Spulenmodul (18) nach einem der vorhergehenden Ansprüche,
**dadurch gekennzeichnet, dass** alle aktiven Bereiche (16) verschiedener Wicklungen (13) in Seitenansicht in einer einzelnen Ebene angeordnet sind.

5. Spulenmodul (18) nach einem der vorhergehenden Ansprüche,
**dadurch gekennzeichnet, dass** die Wicklungen aus einer feinen Litze aus mehreren gegeneinander elektrisch isolierten Drähten gebildet ist, die einen Drahtdurchmesser kleiner gleich 0,1 mm aufweisen.

6. Spulenmodul (18) nach einem der vorhergehenden Ansprüche,
**dadurch gekennzeichnet, dass** eine Anzahl der Wicklungen (13) einem ganzzahligen Vielfachen von 3 entspricht, so dass die Wicklungen (13) einen Drei-Phasen-Betrieb ermöglichen.

7. Spulenmodul (18) nach einem der vorhergehenden Ansprüche,
**dadurch gekennzeichnet, dass** sich ein innerer passiver Bereich (17) und ein äußerer passiver Bereich (17) einer der Wicklungen (13) in ihrer Dicke in axialer Richtung unterscheiden.

8. Spulenmodul (18) nach Anspruch 7, **dadurch gekennzeichnet, dass** die Dicke des äußeren passiven Bereichs (17) einer der Wicklungen (13) so gewählt ist, dass ein Verhältnis der Dicke dieses Bereichs zu der Dicke der aktiven Bereiche (16) kleiner gleich 0,5 ist.

9. Elektrische Maschine mit einer Lagerung (1, 3) und einer in der Lagerung (1, 3) geführten Welle (2), wobei entlang der Welle (2) mindestens eine Magnetmodul (4) mit mehreren Permanentmagneten (5) und mindestens einem Spulenmodul (18) nach einem der vorhergehenden Ansprüche konzentrisch angeordnet sind.

10. Elektrische Maschine nach Anspruch 9, **dadurch gekennzeichnet, dass** das mindestens eine Spulenmodul (18) zumindest an seiner dem Magnetmodul (4) zugewandten Seite mit einer Folie aus einem elektrisch isolierenden Werkstoff beklebt ist.

11. Elektrische Maschine nach Anspruch 9 oder Anspruch 10, **dadurch gekennzeichnet, dass** das mindestens eine Spulenmodul (18) mindestens zwei miteinander verbundene Spulenscheiben (6) und einen durch einen Hohlraum zwischen den beiden Spulenmodulen gebildeten Kühlkanal aufweist.

## Claims

1. Coil module (18) for an electric machine, comprising
at least one coil disc (6) having
at least one coil support (15) made of an electrically insulating material and
a plurality of individual windings (13), which are made of an electrically conductive material and arranged on the at least one coil disc (6) circumferentially around a centre point (14) of the at least one coil disc (6), wherein
each of the windings (13) comprises two active regions (16), which extend radially from the centre point (14), and two passive regions (17), which extend tangentially on their radially outer and inner periphery, and
the active regions (16) of different windings (13) do not cover one another in plan view of the coil disc (6), but each passive region (17) of one of the windings (13) partly covers the corresponding passive regions (17) of the two directly adjacent windings (13), respectively, **characterised in that**
in cross section, the respective winding (13) has a greater thickness at the same cross-sectional area in the axial direction in the active regions (16) than in the passive regions (17).

2. Coil module (18) according to claim 1, **characterised in that** the ratio of the thickness of respective winding (13) in the passive regions (17) to the thickness in the active regions (16) is greater than or equal to 0.3 and is less than 1.

3. Coil module (18) according to any of the preceding claims, **characterised in that**, at a transition from an active region (16) to a passive region (17), the shape of the cross-sectional area of each winding (13) changes.

4. Coil module (18) according to any of the preceding claims, **characterised in that** all the active regions (16) of different windings (13) are arranged in a single plane in side view.

5. Coil module (18) according to any of the preceding claims, **characterised in that** the windings are made from a fine litz wire formed of a plurality of wires that are electrically insulated from one another and have a wire diameter of less than or equal to 0.1 mm.

6. Coil module (18) according to any of the preceding claims, **characterised in that** the number of windings (13) corresponds to an integer multiple of 3, such that the windings (13) enable three-phase operation.

7. Coil module (18) according to any of the preceding claims, **characterised in that** an inner passive region (17) and an outer passive region (17) of one of the windings (13) differ in terms of their thickness in the axial direction.

8. Coil module (18) according to claim 7, **characterised in that** the thickness of the outer passive region (17) of one of the windings (13) is selected such that a ratio of the thickness of that region to the thickness of the active regions (16) is less than or equal to 0.5.

9. Electric machine comprising a bearing (1, 3) and a shaft (2) guided in the bearing (1, 3), wherein at least one magnet module (4) having a plurality of permanent magnets (5) and at least one coil module (18) according to any of the preceding claims are arranged concentrically along the shaft (2).

10. Electric machine according to claim 9, **characterised in that** a film or foil made of an electrically insulating material is glued on the at least one coil module (18) at least on its side facing the magnet module (4).

11. Electric machine according to either claim 9 or claim 10, **characterised in that** the at least one coil module (18) has at least two interconnected coil discs (6) and a cooling channel formed by a cavity between the two coil modules.

## Revendications

1. Module de bobine (18) pour une machine électrique avec
au moins un disque de bobinage (6) avec
au moins un support de bobine (15) composé d'un matériau électriquement isolant et
une pluralité d'enroulements (13) individuels composés d'un matériau électriquement conducteur, qui sont disposés en périphérie autour d'un point central (14) de l'au moins un disque de bobinage (6) sur l'au moins un disque de bobinage (6), dans lequel
chacun des enroulements (13) présente deux zones actives (16) s'étendant radialement en partant du point central (14) et deux zones passives (17) s'étendant de manière tangentielle sur leur bord extérieur radialement et leur bord intérieur radialement, et
vu d'en haut sur le disque de bobinage (6), les zones actives (16) d'enroulements (13) différents ne se superposent pas les unes les autres, chaque zone passive (17) d'un des enroulements (13) toutefois recouvre en partie respectivement les zones passives (17) correspondantes des deux enroulements (13) directement adjacents, **caractérisé en ce que**
l'enroulement (13) respectif présente, dans les zones actives (16), dans la section transversale pour une surface de section transversale identique une épaisseur plus importante dans la direction axiale que dans les zones passives (17).

2. Module de bobine (18) selon la revendication 1, **caractérisé en ce que** le rapport entre l'épaisseur de l'enroulement (13) respectif dans les zones passives (17) et l'épaisseur dans les zones actives (16) est supérieur ou égal à 0,3 et est inférieur à 1.

3. Module de bobine (18) selon l'une quelconque des revendications précédentes, **caractérisé en ce que** la forme de la surface de section transversale de l'enroulement (13) respectif varie lors d'un passage d'une zone active (16) vers une zone passive (17).

4. Module de bobine (18) selon l'une quelconque des revendications précédentes, **caractérisé en ce que** toutes les zones actives (16) de différents enroulements (13) sont disposées dans une vue latérale dans un plan unique.

5. Module de bobine (18) selon l'une quelconque des revendications précédentes, **caractérisé en ce que** les enroulements sont formés d'un toron fin composé de plusieurs fils métalliques électriquement isolés les uns par rapport aux autres, qui présentent un diamètre de fil métallique inférieur ou égal à 0,1 mm.

6. Module de bobine (18) selon l'une quelconque des revendications précédentes, **caractérisé en ce qu'**un nombre d'enroulements (13) correspond à un multiple entier de 3 de sorte que les enroulements (13) permettent un fonctionnement triphasé.

7. Module de bobine (18) selon l'une quelconque des revendications précédentes, **caractérisé en ce qu'**une zone passive intérieure (17) et une zone passive extérieure (17) d'un des enroulements (13) se distinguent dans leur épaisseur dans la direction axiale.

8. Module de bobine (18) selon la revendication 7, **caractérisé en ce que** l'épaisseur de la zone passive extérieure (17) d'un des enroulements (13) est choisie de telle sorte qu'un rapport entre l'épaisseur de ladite zone et l'épaisseur des zones actives (16) est inférieur ou égal à 0,5.

9. Machine électrique avec un support (1, 3) et un arbre (2) guidé dans le support (1, 3), dans laquelle au moins un module magnétique (4) avec plusieurs aimants permanents (5) et au moins un module de bobine (18) selon l'une quelconque des revendications précédentes sont disposés de manière concentrique le long de l'arbre (2).

10. Machine électrique selon la revendication 9, **caractérisée en ce que** l'au moins un module de bobine (18) est collé au moins sur son côté tourné vers le module magnétique (4) avec un film composé d'un matériau électriquement isolant.

11. Machine électrique selon la revendication 9 ou la revendication 10, **caractérisée en ce que** l'au moins un module de bobine (18) présente au moins deux disques de bobinage (6) reliés l'un à l'autre et un canal de refroidissement formé par un espace creux entre les deux modules de bobine.
